# EUROPEAN PATENT APPLICATION

(11) **EP 3 363 548 A1**
(43) Date of publication of application: **22.08.2018**
(21) Application number: 16855516.7
(22) Date of filing: 14.10.2016
(51) Int. Cl.: B06B 1/06

(54) **OSCILLATION EXCITATION METHOD FOR LANGEVIN ULTRASONIC TRANSDUCER, ULTRASONIC MACHINING METHOD, AND ULTRASONIC TRANSMISSION METHOD**

(30) Priority: 15.10.2015 JP 2015216119; 10.11.2015 JP 2015232362; 15.02.2016 JP 2016040472; 13.05.2016 JP 2016097209
(71) Applicant: Uwave Co., Ltd., Nagaoka-shi, Niigata 940-0846 (JP)
(72) Inventor: OHNISHI, Kazumasa, Nagaoka-shi Niigata 940-0846 (JP)
(74) Representative: Banzer, Hans-Jörg
(86) International application number: PCT/JP2016/080514
(87) International publication number: WO 2017/065263

(57) **Abstract**

A novel mode of ultrasonic oscillation is generated in a Langevin ultrasonic transducer comprising a metal block, a metal block provided with a supporting means protruding in a ring shape on its side surface, and polarized piezoelectric elements fixed between these metal blocks, by connecting the ultrasonic transducer to a base via the supporting means, whereby supporting the ultrasonic transducer on the base in a restrained state, and applying to the piezoelectric elements a voltage having such frequency that the ultrasonic transducer generates an ultrasonic oscillation with back-and-forth motion in a direction perpendicular to plane surfaces of the piezoelectric elements which has no oscillation node within the ultrasonic transducer; this novel ultrasonic oscillation mode is utilized for performing ultrasonic machining methods as well as for ultrasonic transmission method.

## Description

### FIELD OF THE INVENTION

The present invention relates to an oscillation generation method for Langevin ultrasonic transducer, and particularly relates to a method of generating an ultrasonic oscillation of a novel mode. Further, the invention relates to an ultrasonic machining method and an ultrasonic transmission method, either of which utilizes the ultrasonic oscillation of a novel mode.

### BACKGROUND OF THE INVENTION

A variety of ultrasonic transducers utilizing piezoelectric elements as the ultrasonic generating means are known. One of representative ultrasonic transducers is a Langevin ultrasonic transducer which comprises a pair of metal blocks and polarized piezoelectric elements fixed between the metal blocks. In particular, a bolted Langevin ultrasonic transducer which comprises a pair of metal blocks and polarized piezoelectric elements fixed firmly between the metal blocks by means of a bolt is known as Langevin ultrasonic transducer for generating an ultrasonic oscillation with increased energy. Therefore, the bolted Langevin ultrasonic transducers have been studied in the use of ultrasonic machining procedures such as cutting, plastic working, and abrasive grain machining. Further, a variety of ultrasonic transducers find their uses in combination with a diaphragm or an oscillation transmitting means to transmit the generated ultrasonic oscillation to the outside. For instance, ultrasonic workings such as ultrasonic cleaning, metal welding, plastic working, ultrasonic atomizing, ultrasonic emulsifying, and ultrasonic dispersing; and utilization for a variety of ultrasonic transmitting means such as sonar (e.g., fish detector), ultrasonic crack detector, medical echo detection system, and flow meter, are studied and utilized.

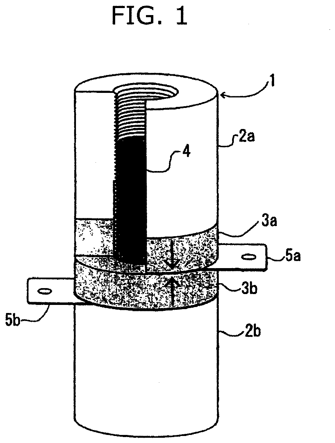

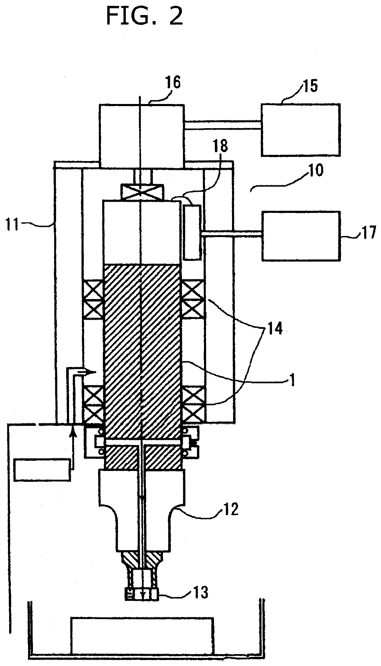

A variety of ultrasonic transducers including the bolted Langevin ultrasonic transducer are known with their constitutions. For the sake of reference, a constitution of a representative bolted Langevin ultrasonic transducer and its working embodiment are briefly explained hereinafter, by referring to the attached Fig. 1 and Fig. 2.

Fig. 1 shows a representative structure of the bolted Langevin ultrasonic transducer. The bolted Langevin ultrasonic transducer 1 has a structure in which polarized piezoelectric elements (e.g., piezoelectric ceramic plates such as PZT elements) 3a, 3b are placed between a pair of metal blocks 2a, 2b and fixed there by means of a bolt 4. In Fig. 1, the arrows shown in the piezoelectric elements 3a, 3b are placed for indicating the polarization directions. To the piezoelectric elements 3a, 3b are attached electrode elements (e.g., such as those made of phosphor bronze) 5a, 5b which work for applying electric energy to the piezoelectric elements 3a, 3b.

Fig. 2 shows an ultrasonic grinding apparatus (i.e., grinder) employing a bolted Langevin ultrasonic transducer for generating ultrasonic oscillation. In Fig. 2, the ultrasonic grinding apparatus 10 has a housing 11 in which an ultrasonic transducer 1 having a horn 12 and a grinding tool 13 attached to its end is placed. The ultrasonic transducer 1 is supported in the housing by a pair of bearings 14 to ensure its rotation. The rotation of the ultrasonic transducer 1 is actuated by means of an AC spindle motor 16 supplied via a servo-motor 15. In the apparatus shown in Fig. 2, electric energy for generating ultrasonic oscillation in the ultrasonic transducer 1 is supplied via a contact-type power feeding means 18 comprising a carbon brush and a slip ring connected to the electric power source 17 placed outside.

It is expected that the use of ultrasonic machining apparatus is to reduce electric energy required for the machining and to improve accuracy and precision of the machining. Nevertheless, it appears that the conventional ultrasonic machining apparatuses cannot give satisfactory results, and hence, ultrasonic machining is still not widely employed.

Therefore, it is desired that electric energy required to generate an ultrasonic oscillation in an ultrasonic transducer is reduced and the accuracy/precision of machining is increased.

The inventor of the present inventor has until now continued studies for developing a number of ultrasonic transducers which work with reduced electric energy for generating an ultrasonic oscillation and for improving accuracy and precision of machining. Some of these studies results in inventing new system for generating ultrasonic oscillation. One of the recent inventions is disclosed in Patent Publication 1 (WO 2014/017460 A1).

Patent Publication 1 discloses a support structure which supports an oscillating complex comprising a tool and an ultrasonic oscillator with increased stability and reducing leakage of ultrasonic oscillation generated in the oscillating complex to a base supporting the complex, whereby enabling application of oscillation energy to the tool at an increased efficiency. The support structure comprises engagement of a flange formed on the oscillating complex and a flange formed on a separately provided supporting base, in which the engagement is made by bringing one surface of the flange of the oscillating complex into contact with the flange of the supporting base under stress, provided that the flange of the oscillating complex is not bonded to the flange of the supporting base, and that the flange of the oscillating complex engaged with the flange of the supporting base oscillates in the thickness direction of the same flange when the oscillating complex oscillats.

The ultrasonic machining apparatus utilizing the support structure described in Patent Publication 1 is able to solve a portion of the problems observed in the conventional ultrasonic machining apparatuses employing the known ultrasonic transducer. However, as a result of the inventor's further studies, it has been confirmed that the ultrasonic machining apparatus described in Patent Publication 1 cannot reduce the required electric energy at well satisfactory level and further cannot improve machining accuracy and precision at well satisfactory level.

### SUMMARY OF THE INVENTION

Accordingly, it is an object of the invention to provide a new system employing a new structure of ultrasonic transducer and a new mode of ultrasonic oscillation which enables reduction of electric energy and improvement of machining accuracy and precision at well satisfactory levels.

In the first stage, the inventor of the present invention has studied the mechanism of generation of ultrasonic oscillation for the purpose of modifying the supporting structure of an ultrasonic transducer.

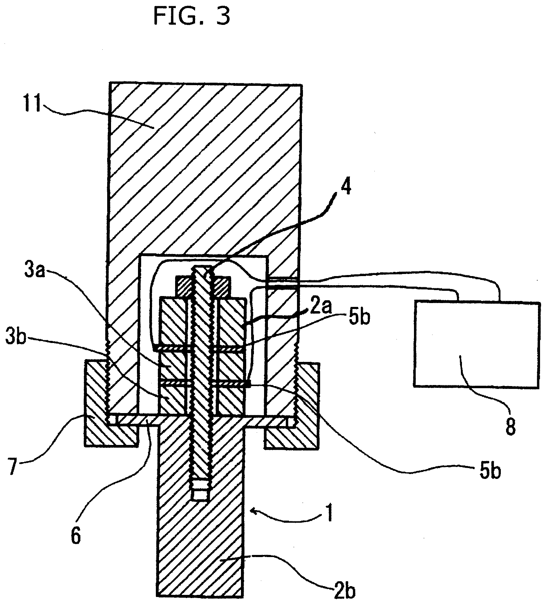

In the beginning of the study, the inventor has designed a model of a new supporting structure for firmly supporting an ultrasonic transducer, which is shown in Fig. 3. As is shown in Fig. 3, a bolted Langevin ultrasonic transducer 1 is prepared by forming a metal block 2b to be arranged on the front side (generally named "front mass") having a supporting means 6 in a shape of ring united on the upper side surface of the front mass 1, placing polarized piezoelectric plate elements 3a, 3b between the front mass 1 and a metal block 2a to be arranged on the rear side (generally named "rear mass"), and finally fixing firmaly thus formed structure by means of a bolt 4. The resulting bolted Langevin ultrasonic transducer 1 is placed in a housing 11 having a male screw on the outer surface (the housing 11 *per se* is fixed to and supported on a base (not shown)), and then the ultrasonic transducer 1 is fixed to the housing 11 using the male screw and a nut 7 for restraining the ultrasonic transducer 1 within the housing 11.

The electric energy of a voltage having a prescribed frequency is supplied to the piezoelectric elements 3a, 3b of the bolted Langevin ultrasonic transducer 1 through a hole formed on the housing 11 from an ultrasonic oscillating circuit 8 arranged outside of the housing 11.

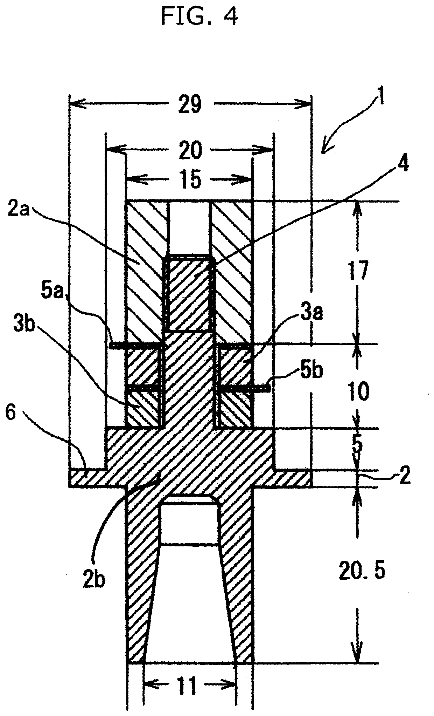

In the second stage, oscillation characteristics of an ultrasonic transducer supported and fixed onto the supporting structure shown in Fig. 3 are examined using a Langevin ultrasonic transducer having a structure and sizes (unit: mm) prepared as per the figure given in Fig. 4. The Langevin ultrasonic transducer 1 shown in Fig. 4 comprises a rear mass 2a made of stainless steel, a front mass 2b united with a supporting means 6, both being made of stainless steel, and polarized piezoelectric plate elements (PZT elements) 3a, 3b. The polarized piezoelectric plate elements 3a, 3b are fixed between the rear mass 2a and the front mass 2b, using a bolt 4. The front mass 2b has a tapered hollow at the lower end for receiving a collet equipped with a tool.

The bolted Langevin ultrasonic transducer 1 having a structure and sizes shown in Fig. 4 was first examined experimentally in its ultrasonic oscillating characteristics, by first observing frequency-depending characteristics of the ultrasonic transducer under no restraining condition, by means of an impedance analyzer. The same bolted Langevin ultrasonic transducer supported and restrained in the structure shown in Fig. 3 was then subjected to the observation of its frequency-depending characteristics using the impedance analyzer.

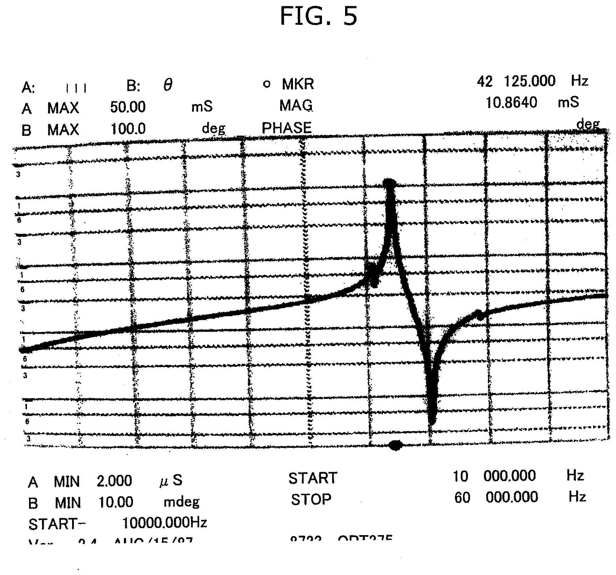

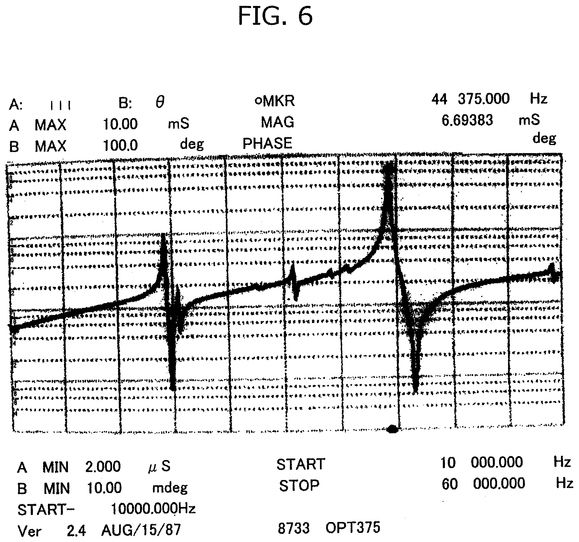

Fig. 5 shows an admittance curve obtained by the observation of frequency-depending characteristics of the ultrasonic transducer 1 of Fig. 4 under no restraining condition. Fig 6 shows an admittance curve obtained by the observation of frequency-depending characteristics of the ultrasonic transducer 1 restrained in the structure shown in Fig. 3.

The admittance curve of Fig. 5 indicates that a sole admittance peak is present at a frequency position of 42.125 kHz in the case that the ultrasonic transducer is placed under non-restraining condition. The frequency (42.125 kHz) at which the sole admittance peak is observed is understood to be a resonance frequency for generating a primary axial oscillation (or first order axial oscillation) of the ultrasonic transducer 1 of Fig. 4 under no restraining condition.

In contrast, the admittance curve of Fig. 6 indicates that one admittance peak is observed at a frequency position of 44.375 kHz in the vicinity of the frequency for generating the primary axial oscillation and in addition a relatively smaller admittance peak is observed at a frequency position of 24.250 kHz which is lower than the frequency for the primary axial oscillation.

The presence of the two admittance peaks observed in the admittance curve of Fig. 6 was understood to indicate that the bolted Langevin ultrasonic transducer 1 generates an ultrasonic oscillation by applying a voltage of either frequency. In other words, each frequency corresponds to a resonance frequency at which the ultrasonic oscillation is generated in the Langevin ultrasonic transducer.

Based on the above-mentioned understanding, the inventor has conducted additional experiments comprising measurements of axial displacement of the lower end of the front mass 2b under oscillation in the axial direction by applying an electric energy of a voltage having a frequency near to either of the above-identified two resonance frequency to a bolted Langevin ultrasonic transducer 1 of Fig. 4 under the restraining condition shown in Fig. 3a. The axial displacement has been measured by means of a laser Doppler vibration indicator.

As a result of the above-mentioned measurement of the axial displacement of the lower end of the front mass 2b using a laser Doppler vibration indicator, the following data have been obtained.

The axial displacement of the lower end of the front mass 2b measured when an electric power of a voltage having a frequency of 43.86 kHz (which is near to the frequency of the larger admittance peak seen in Fig. 6 on a high frequency side) was applied to the ultrasonic transducer so as to generate an ultrasonic oscillation (i.e., primary axial oscillation) was approx. 33 µm, and the electric power required for generating the ultrasonic oscillation was approx. 3.5 W.

In contrast, the axial displacement of the lower end of the front mass 2b measured when an electric power of a voltage having a frequency of 23.64kHz (which is near to the frequency of the smaller admittance peak seen in Fig. 6 on a low frequency side) was applied to the ultrasonic transducer so as to generate an ultrasonic oscillation was approx. 30 µm, and the electric power required for generating the ultrasonic oscillation was as low as approx. 0.5 W.

Accordingly, it was concluded that the axial displacement caused by ultrasonic oscillation (primary axial oscillation) observed in the ultrasonic transducer when an electric power of a voltage having a frequency corresponding to the frequency of the relatively large admittance peak observed in the admittance curve of Fig. 6 on the higher frequency side was essentially the same as the axial displacement caused by ultrasonic oscillation observed in the ultrasonic transducer when an electric power of a voltage having a frequency corresponding to the frequency of the relatively small admittance peak observed in the admittance curve of Fig. 6 on the lower frequency side.

In contrast, the electric power required for generating ultrasonic oscillation to cause essentially same displacement in the generation was approx. 1/7 (0.5 W/3.5 W) in the latter case, as compared from the former case.

Accordingly, it was concluded that an electric power required for generating an ultrasonic oscillation in a bolted Langevin ultrasonic transducer of Fig. 4 restrained in a supporting structure of Fig. 3 was prominently reduced when the ultrasonic oscillation was generated by an electric power of a voltage having a resonance frequency on the latter low frequency side, as compared when the ultrasonic oscillation (i.e., primary axial oscillation) was generated by an electric power of a voltage having a resonance frequency on the former high frequency side.

In the next stage, a collet equipped with a tool was placed in the tapered hollow of the front mass 2b of the bolted Langevin ultrasonic transducer having the constitution of Fig. 4. Then, the axial and lateral displacements of the front end of the tool were measured for the ultrasonic transducer equipped with a tool. In the measurement, a rod having round section (length; 40 mm, diameter: 3 mm) was employed as the tool (that is a drill). The rod was inserted into the collet to give a protruded portion of 14.8 mm.

In advance of the measurement of the displacements, an admittance curve for the bolted Langevin ultrasonic transducer of Fig. 4 equipped with the collet and tool was obtained using an impedance analyzer. There were observed in the obtained admittance curve two admittance peaks; one admittance peak on the higher frequency side and another admittance peak on the lower frequency side.

In consideration of the frequency of the admittance peak, an electric power of a voltage having a frequency of 30.20 kHz (for the higher resonance frequency) or a voltage having a frequency of 21.09 kHz (for the lower resonance frequency) was applied to the bolted Langevin ultrasonic transducer.

The above-mentioned measurements indicate the following:
in the case that an ultrasonic oscillation is generated in the ultrasonic transducer having a tool by applying an electric power of a voltage having the higher resonance frequency, the axial displacement of the front end of the tool was 8.33 µm p-p, the lateral displacement of the front end of the tool was 0.787 µm p-p, and the electric power required for the generation of ultrasonic oscillation was 1.17 W; and
in the case that an ultrasonic oscillation is generated in the ultrasonic transducer having a tool by applying an electric power of a voltage having the lower resonance frequency, the axial displacement of the front end of the tool was 7.70 µm p-p, the lateral displacement of the front end of the tool was 0.248 µm p-p, and the electric power required for the generation of ultrasonic oscillation was 0.31 W.

Accordingly, it was concluded that the axial displacement of the front end of the tool caused by the ultrasonic oscillation generated in either case was essentially the same, while the lateral displacement of the front end of the tool caused by the ultrasonic oscillation generated by the application of electric power of a voltage having a lower resonance frequency was approx. 1/3 (0.248/0.787), as compared with the lateral displacement of the front end of the tool caused by the ultrasonic oscillation (primary axial oscillation) generated by the application of electric power of a voltage having a high resonance frequency. In addition, the electric power required for the generation of ultrasonic oscillation was approx. 1/4 (0.31/1.17) in the case that the ultrasonic oscillation was generated by applying an electric power of a voltage having the lower resonance frequency, as compared with the case that the ultrasonic oscillation was generated by applying an electric power of a voltage having the higher resonance frequency, that is, a primary axial oscillation. Thus, the electric power required for generation of an ultrasonic oscillation was prominently reduced.

From the experimental results described above, it was concluded that the electric power required for generation of an ultrasonic oscillation is prominently reduced if an electric power of a voltage having a resonance frequency seen in a frequency area lower than a resonance frequency for generating the primary axial oscillation. In addition, the lateral oscillation (rolling vibration) accompanying the axial oscillation is also prominently reduced.

In the additional stage, the inventor studied the characteristics of the ultrasonic oscillation generated in the ultrasonic transducer when an electric power of a voltage having a resonance frequency corresponding to an admittance peak appearing on a side lower than an admittance peak corresponding to the resonance frequency for generating a primary axial oscillation, using "ANSYS" (available ANSYS Japan), a commercially available software for analysis according to FEM (Finite Element Method) .

In the study, an ultrasonic oscillation generated in the Langevin ultrasonic transducer of Fig. 4 under the restraining condition provided by the supporting structure shown in Fig. 3 was analyzed. In other words, the analysis was carried out under the conditions giving the admittance curve shown in Fig. 6.

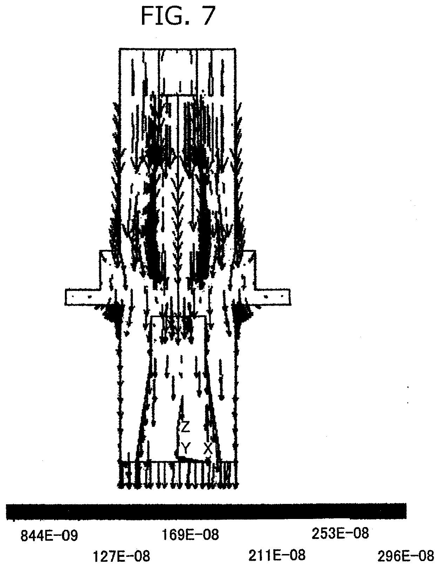

The analytical image of ultrasonic oscillation produced in the ultrasonic transducer when an electric power of a voltage having a resonance frequency corresponding to the admittance peak appearing on the side lower than the admittance peak corresponding to the frequency for the primary axial oscillation, which was given by the analysis according to FEM by means of ANSYS is shown in Fig. 7.

As is clear from the analytical image of Fig. 7, the oscillation produced in the ultrasonic transducer is an oscillation of the whole ultrasonic transducer with a back-and-forth motion in the same axial direction (along with the longitudinal axis of the ultrasonic transducer) and has no oscillation node in the ultrasonic transducer. In this specification, this oscillation is named "Pseudo Zero Order Oscillation". Further, Fig. 7 indicates that an oscillation node is present in the site at which the supporting means in a ring shape is in contact with the base, and the supporting means with a ring shape also oscillates in phase with the ultrasonic oscillation.

Accordingly, it is concluded that the Pseudo Zero Order Oscillation is clearly different from the primary axial oscillation that has one node in the ultrasonic transducer and two divided portions oscillating in opposite axial directions from the site of node. Therefore, it is assumed that the oscillation according to the Pseudo Zero Order Oscillation mode shows such advantages as reduction of loss of electric power applied to the ultrasonic transducer and reduction of lateral oscillation.

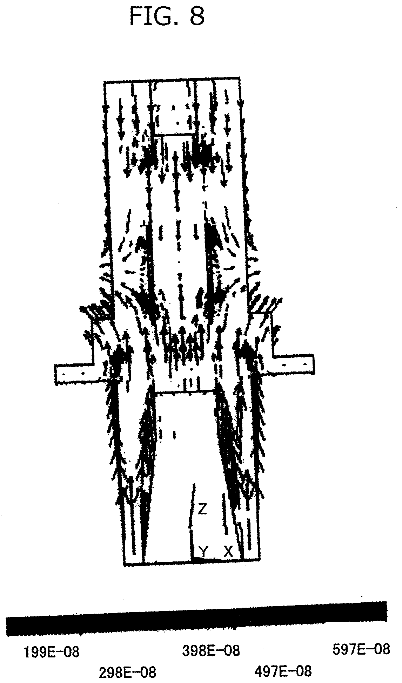

In contrast, the oscillation caused by the application of an electric power of a voltage having a resonance frequency generating the primary axial frequency has one node in the ultrasonic transducer, and the oscillation is divided from the site of node to give oscillations in the opposite directions. This is seen in Fig. 8 which shows the ANSYS analytical image of the primary axial frequency of the ultrasonic transducer.

Thus, the present invention was obtained based on the new discovery on the ultrasonic oscillation of the Langevin ultrasonic transducer.

Accordingly, there is provided by the invention a method for generating ultrasonic oscillation in a Langevin ultrasonic transducer comprising a metal block, a metal block provided with a supporting means protruding in a ring shape on side surface thereof, and polarized piezoelectric elements fixed between these metal blocks, which comprises;
connecting the ultrasonic transducer to a base via the supporting means, whereby supporting the ultrasonic transducer on the base in a restrained state, and
applying to the piezoelectric elements a voltage having such frequency that the ultrasonic transducer generates an ultrasonic oscillation with back-and-forth motion in a direction perpendicular to plane surfaces of the piezoelectric elements which has no oscillation node within the ultrasonic transducer, whereby the ultrasonic oscillation having a mode of back-and-forth motion in a direction perpendicular to planes surfaces of the piezoelectric elements which has no oscillation node within the ultrasonic transducer is generated in the Langevin ultrasonic transducer.

Further, there is provided a method of the invention in which the frequency of the voltage applied to the piezoelectric elements is a resonance frequency in a frequency range lower than a frequency at which a primay axial oscillation is generated.

Furthermore, there is provided a method of the invention in which an oscillation node is present at a site at which the supporting means is connected to the base and the supporting means oscillates in phase with the ultrasonic oscillation.

Furthermore, there is provided an ultrasonic machining method which comprises:
connecting a tool to one end of a Langevin ultrasonic transducer comprising a metal block, a metal block provided with a supporting means protruding in a ring shape on side surface thereof, and polarized piezoelectric elements fixed between these metal blocks;
connecting the ultrasonic transducer to a base via the supporting means, whereby supporting the ultrasonic transducer on the base in a restrained state; and
applying to the piezoelectric elements a voltage having a such frequency that the ultrasonic transducer generates an ultrasonic oscillation with back-and-forth motion in a direction perpendicular to plane surfaces of the piezoelectric elements which has no oscillation node within the ultrasonic transducer, whereby the tool oscillates with back-and-forth motion in a direction perpendicular to plane surfaces of the piezoelectric elements of the ultrasonic transducer.

Furthermore, there is provided an ultrasonic machining method of the invention, in which the tool rotates on a central axis of the Langevin ultrasonic transducer.

Furthermore, there is provided an ultrasonic machining method of the invention, in which the tool is selected from the group consisting of an end mill, a drill, a polishing tool and a grinding tool.

Furthermore, there is provided an ultrasonic machining method of the invention, in which the tool moves with back-and-forth motion along a central axis of the Langevin ultrasonic transducer.

Furthermore, there is provided an ultrasonic machining method of the invention, in which the tool is selected from the group consisting of a cutting tool, a diaphragm and a welding tool.

Furthermore, there is provided an ultrasonic transmission method which comprises:
connecting a ultrasonic transmission means to one end of a Langevin ultrasonic transducer comprising a metal block, a metal block provided with a supporting means protruding in a ring shape on side surface thereof, and a polarized piezoelectric elements fixed between these metal blocks;
connecting the ultrasonic transducer to a base via the supporting means, whereby supporting the ultrasonic transducer on the base in a restrained state; and
applying to the piezoelectric elements a voltage having a such frequency that the ultrasonic transducer generates an ultrasonic oscillation with back-and-forth motion in a direction perpendicular to plane surfaces of the piezoelectric elements which has no oscillation node within the ultrasonic transducer, whereby the ultrasonic transmission means oscillates with back-and-forth motion in a direction perpendicular to plane surfaces of the piezoelectric elements of the ultrasonic transducer.

### EFFECTS OF THE INVENTION

The method according to the invention enables to generate in an ultrasonic transducer an ultrasonic oscillation of a novel mode, which is named Pseudo Zero Order Oscillation. The ultrasonic machining method of the invention utilizing the Pseudo Zero Order Oscillation enables not only to save an electric power for performing ultrasonic machining but also to improve machining accuracy or precision. In addition, the ultrasonic transmitting method of the invention utilizing the Pseudo Zero Order Oscillation enables to save an electric power for the transmission. Further, the ultrasonic transmission with high efficiency is expected, because the Pseudo Zero Order Oscillation is transmitted with increased directivity.

### BRIEF DESCRIPTIONS OF THE DRAWINGS

Fig. 1 illustrates a constitution of a representative bolted Langevin ultrasonic transducer.
Fig. 2 illustrates a constitution of a representative ultrasonic machining apparatus.
Fig. 3 illustrates an example of a constitution of a structure for supporting and fixing an ultrasonic transducer under restraining condition that can be utilized in the method of the invention for generating the ultrasonic oscillation according to the invention.
Fig. 4 illustrates an example of a constitution of an ultrasonic transducer that can be utilized for the method of the invention for generating the ultrasonic oscillation according to the invention.
Fig. 5 shows an admittance curve indicating frequency characteristics of the ultrasonic transducer of Fig. 4 under non-restraining condition.
Fig. 6 shows an admittance curve indicating frequency characteristics of the ultrasonic transducer of Fig. 4 which is restrained by the use of the structure shown in Fig. 3.
Fig. 7 shows an image of a oscillation mode (Pseudo Zero Order Oscillation) generated in an ultrasonic transducer operated in the method of the invention - based on the calculation according to FEM.
Fig. 8 shows an image of a oscillation mode of primary axial oscillation - based on the calculation according to FEM.
Fig. 9 shows a schematic image of the oscillation mode of Pseudo Zero Order Oscillation utilized in the method of the invention for generation of ultrasonic oscillation.
Fig. 10 shows a schematic image of the oscillation mode of primary axial oscillation (A) and its enlarged image to make clear the oscillation of the piezoelectric element (B).
Fig. 11 illustrates another example of an ultrasonic transducer employable in the method of the invention and another example of a constitution of a structure for supporting and fixing an ultrasonic transducer under restraining condition that can be utilized in the method of the invention for generating the ultrasonic oscillation according to the invention.
Fig. 12 shows an image of an oscillation mode of primary axial oscillation generated in the ultrasonic transducer fixed in the supporting structure shown in Fig. 11 - based on the calculation according to FEM.
Fig. 13 illustrates a further example of a constitution of a structure for supporting and fixing an ultrasonic transducer under restraining condition that can be utilized in the method of the invention (A) and shows an oscillation mode utilizing the Zero Order Oscillation and a conventionally employed primary axial oscillation in combination.
Fig. 14 illustrates a drilling machine for performing the ultrasonic machining method according to the invention.
Fig. 15 illustrates a polishing (or lapping) machine for performing the ultrasonic machining method according to the invention.
Fig. 16 illustrates a cutting machine for performing the ultrasonic machining method according to the invention.
Fig. 17 illustrates a cleaning bath equipped with an ultrasonic transducer for performing the ultrasonic transmission method according to the invention.
Fig. 18 illustrates an ultrasonic sonar for performing the ultrasonic transmission method according to the invention.

### EMBODIMENTS FOR PERFORMING THE INVENTION

To the best knowledge of the inventor, the presence of a resonance frequency corresponding to an admittance peak appearing on a side lower than the admittance peak corresponding to the resonance frequency for generating the primary axial oscillation, which is employed in the method of generating ultrasonic oscillation of the invention, is not known until now. In the invention, the former resonance frequency is named a resonance frequency for generating "Pseudo Zero Order Oscillation". Further, to the best knowledge of the inventor, a method for generating an ultrasonic oscillation according to the Pseudo Zero Order Oscillation is not known.

For practicing the method of generating the Pseudo Zero Order Oscillation in an ultrasonic transducer according to the invention, it is required in the first step to prepare an ultrasonic transducer provided with a supporting means (or supporting framework, shown in Fig. 4). The supporting means in a shape of a ring is provided for firmly supporting and restraining the ultrasonic transducer onto a base (or a base structure) which is placed outside. Thus prepared ultrasonic transducer is then supported and restrained on the supporting structure of Fig. 3 at the peripheral area by means of the male screw of the housing and the nut. In Fig. 3, the supporting means 6 is attached to the front mass 2b. However, the supporting means can be attached to the rear mass. In addition, while the supporting means is preferably formed on the front mass or rear mass to give a united structure, an independently prepared supporting means can be fixed to the front mass or rear mass, or fixed between the front mass and rear mass.

In the second step, thus prepared ultrasonic transducer is examined for determining its frequency characteristics using an impedance analyzer, to obtain an admittance curve as shown in Fig. 6. If two admittance peaks are observed in the admittance curve as shown in Fig. 6, it is understood that one admittance peak appearing on a higher frequency side indicates a resonance frequency for generating a primary axial oscillation, and that another admittance peak appearing on a lower frequency side indicates a resonance frequency for generating the Pseudo Zero Order Oscillation.

The above-mentioned understanding can be confirmed by obtaining an admittance curve of the above-prepared ultrasonic transducer under non-restraining condition and comparing an admittance peak (indicating a resonance frequency for generating a primary axial oscillation) with the above-mentioned admittance peak on the higher frequency side. However, there are cases in which no clear admittance peak indicating a frequency for generating a primary axial oscillation is observed, probably due to the structure of the ultrasonic transducer. In these cases, the frequency for generating a primary axial oscillation can be determined using a known calculation system. Anyway, after determining the resonance frequency for generating a primary axial oscillation, a resonance frequency for generating the Pseudo Zero Order Oscillation can be understood to be a frequency corresponding to an admittance peak appearing on the lower frequency side.

If three or more admittance peaks are observed in the resulting admittance curve, the resonance frequency for generating a primary axial oscillation is first determined or assumed according to one of the above-mentioned method, and a frequency corresponding to an admittance peak adjacent to the admittance peak corresponding to the resonance frequency for generating a primary axial oscillation.

The Pseudo Zero Order Oscillation can be generated in the above-mentioned ultrasonic transducer prepared as above. In more detail, the ultrasonic transducer is attached to an ultrasonic machining apparatus, and applying an electric power of a voltage having thus determined resonance frequency for generating the Pseudo Zero Order Oscillation. However, it should be noted that the above-mentioned resonance frequency for generating the Pseudo Zero Order Oscillation is determined using the ultrasonic transducer equipped with neither a collet nor a tool. Accordingly, the resonance frequency for generating Pseudo Zero Order Oscillation may move or vary slightly. Further, a certain movement of the resonance frequency for generating Pseudo Zero Order Oscillation may be observed because of a variation of the condition of restraining the tool-equipped ultrasonic transducer. Therefore, it is desired that movement or variation of the resonance frequency for generating Pseudo Zero Order Oscillation can be continuously traced by means an appropriate ultrasonic generating circuit so as to automatically adjust and determine most appropriate resonance frequency for the purpose.

There is a case in which an ultrasonic transducer that has the structure of Fig. 4 and is supported and restrained in the supporting structure of Fig. 3 gives no admittance curve in the observation using an impedance detector having two or more impedance peaks. In that case, the desired admittance curve having two or more impedance peaks (as shown in Fig. 6) therein may be obtained by adjusting the restraining condition. If the adjustment of the restraining condition does not result in a favorable result, it may be required to modify the ultrasonic transducer and/or the constitution of structure for supporting and restraining the ultrasonic transducer, with further reference to the constitution of structure for supporting an ultrasonic transducer (shown in Fig. 3) and the shape and sizes of the ultrasonic transducer (shown in Fig. 4).

For the sake of confirmation, however, it is indicated that the he constitution of structure for supporting an ultrasonic transducer (shown in Fig. 3) and the shape and sizes of the ultrasonic transducer (shown in Fig. 4) are mere representative embodiments, and the ultrasonic transducer and its supporting and restraining system shown in these Figures do not limit an ultrasonic transducer and its supporting and restraining system utilizable for practicing the method of the invention for generating Pseudo Zero Order Oscillation.

As described above, the inventor has concluded that the ultrasonic oscillation generated by the method of generation of an ultrasonic oscillation according to the invention is an ultrasonic oscillation with back-and-forth motion in a direction perpendicular to planes surfaces of the piezoelectric elements which has no oscillation node within the ultrasonic transducer.

Details of the data on which the above-mentioned conclusion is derived are again explained hereinbelow.

As is described hereinbefore, to the best knowledge of the inventor, the presence of an admittance peak observed in an admittance curve on the side of lower frequency is not known. Therefore, in the initial stage, the inventor has not understood what is meant by the presence of the admittance peak on the side of lower frequency in the admittance curve. However, as has been made clear from the explanation on the experimental results presented hereinbefore, a frequency corresponding to the frequency of the admittance peak on the lower frequency side also is a resonance frequency for generating an ultrasonic oscillation in the ultrasonic transducer, and an ultrasonic oscillation can be generated in the ultrasonic transducer by application of a reduced electric power of a voltage having the resonance frequency. Moreover, a lateral vibration is reduced to a lower level.

In the next stage, the inventor has tried to analyze the newly observed ultrasonic oscillation using an ANSYS which is a commercially available calculation software for the analysis according to Finite Element Method.

In the analysis, a mode of an ultrasonic oscillation generated in the ultrasonic transducer employed in the experiments has been analyzed by inputting the shape, sizes, material and restraining condition adopted in the experiments into ANSYS. The results of the analysis on the mode of an ultrasonic oscillation are shown in Fig. 7 and Fig. 8.

As is described hereinbefore, Fig. 7 shows an image indicating an oscillation mode provided by ANSYS under such condition where an electric power of a voltage having a resonance frequency on the lower frequency side is applied to an ultrasonic transducer under restraining. The image shown in Fig. 7 apparently indicates that the oscillation appearing in the ultrasonic transducer is an oscillation in which the ultrasonic transducer oscillates as a whole in one direction and no oscillation node exists within the ultrasonic transducer. On the other hand, an oscillation node exists in the peripheral side of the supporting means in a ring shape of the ultrasonic transducer. The peripheral side of the supporting means corresponds to the site of connection to the base.

Fig. 8 shows an image indicating an oscillation mode under the restraining condition where an electric power of a voltage having a resonance frequency on the higher frequency side is applied to an ultrasonic transducer under restraining. The image shown in Fig. 8 apparently indicates that the oscillation appearing in the ultrasonic transducer is an oscillation having an oscillation node in the ultrasonic transducer and that the oscillation is a stretching oscillation comprising two axial oscillations each oscillating in an opposite direction from the oscillation node.

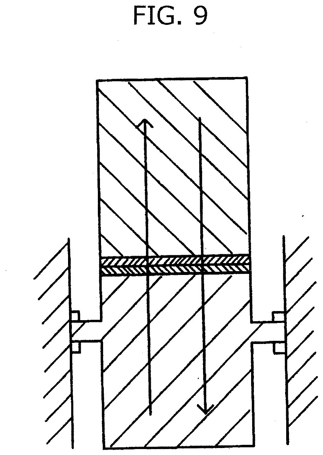

Fig. 9 is a schematic image prepared for explaining the oscillation mode shown in the image of Fig. 7. As is seen in Fig. 9, the ultrasonic oscillation according to the oscillation mode of the invention repeats as a whole movement of a back-and-forth motion. The inner periphery site of the supporting means of the ultrasonic transducer also oscillates with a back-and-forth motion in phase of the ultrasonic transducer. This oscillation mode is the Pseudo Zero Order Oscillation mode referred to in this specification.

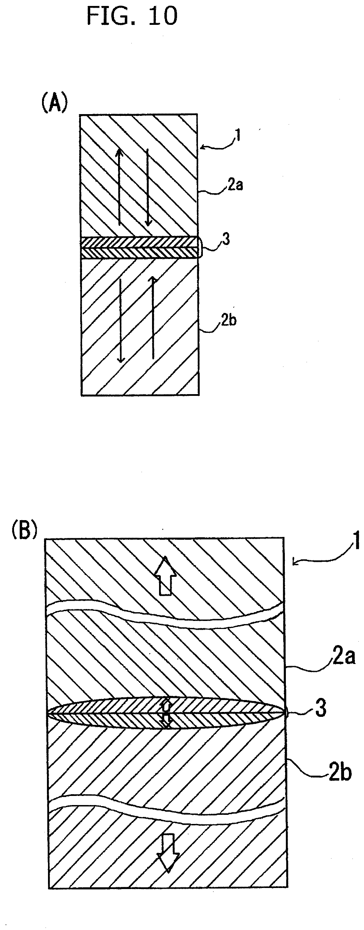

Fig. 10 (A) is a schematic image prepared for explaining the oscillation mode shown in the image of Fig. 8. As is seen in Fig. 10 (A), the ultrasonic oscillation of Fig. 8 has an oscillation node in the vicinity of the central portion (where the piezoelectric elements are placed) and repeats a stretching oscillation (primary axial oscillation). Since the primary axial oscillation is a stretching oscillation, it is assumed that displacement of the lower end of the ultrasonic transducer to which a tool is attached requires an electric power larger than that required in the oscillation according to the Pseudo Zero Order Oscillation shown in Fig. 9.

Fig. 10 (B) is an enlarged image in which the oscillation of the ultrasonic transducer (shown in Fig. 10 (A)) is schematically shown, and deformation of the piezoelectric elements 3 under assumption is schematically shown. The piezoelectric elements 3 repeat expansion and shrinkage under variation of an applied electric energy. In the expansion, it is considered that the piezoelectric elements deform to expand in the central portion against the pressure applied to the piezoelectric elements. If the expansion of the piezoelectric elements in the central portion does not occur symmetrically, the planes on the upper end and lower end are not completely parallel to the center plane of the stretching oscillation. Therefore, lateral vibration is apt to occur on the upper and lower end planes.

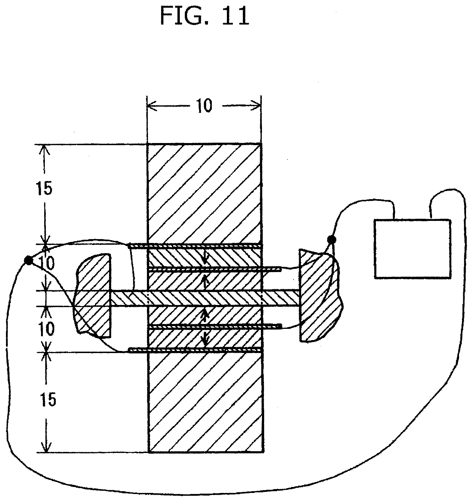

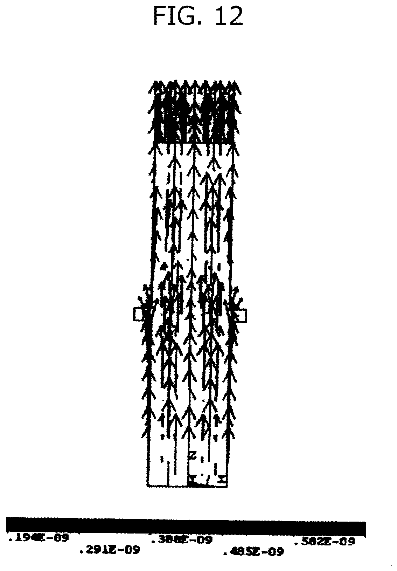

Fig. 11 shows other examples of the shape and sizes (units: mm) of an ultrasonic transducer and its supporting/restraining structure employable for performing the method for generation of ultrasonic oscillation according to the invention. Fig. 12 is an image indicating an ultrasonic oscillation (Pseudo Zero Order Oscillation) which appears in the ultrasonic transducer of Fig. 11 which is supported and restrained as is seen in Fig. 11. The image of Fig. 12 is obtained by the analysis according to FEM.

The oscillation seen in the image of Fig. 12 is an oscillation in the same mode as that seen in Fig. 7, that is, an oscillation in which the ultrasonic transducer oscillates back-and-forth as a whole in one direction and no oscillation node exists within the ultrasonic transducer. An oscillation node exists in the peripheral side of the supporting means in a ring shape of the ultrasonic transducer. The peripheral side of the supporting means corresponds to the site of connection to the base.

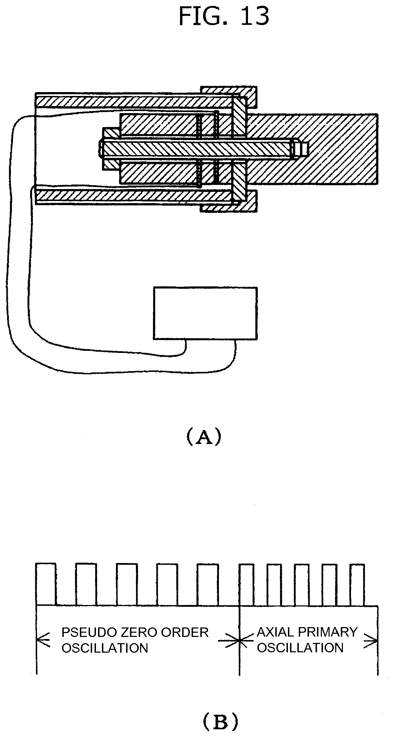

The Pseudo Zero Order Oscillation generated in an ultrasonic transducer when practicing the method of the invention can be utilized in combination with the conventionally utilized primary axial oscillation. An embodiment of use of both oscillations in combination is explained by referring to Fig. 13 (A) and Fig. 13 (B).

The figures seen in Fig. 13 (A) and Fig. 13 (B) respectively show a still further structure for supporting/restraining an ultrasonic transducer according to the invention and an oscillation mode for ultrasonic machining utilizing the Pseudo Zero Order Oscillation and a conventional primary axial oscillation in combination.

For instance, a cutter is attached to the end of the front mass on the right side in Fig. 13 (A), and thus assembled cutting device is employed in ultrasonic machining. The cutting device can be utilized in a ultrasonic cutting procedure with increase of cutting efficiency and obviation of local fatigue of the cutter, if an ultrasonic oscillation of an oscillation mode performing the Pseudo Zero Order Oscillation and the primary axial oscillation alternately (as seen in 13 (B)) is utilized.

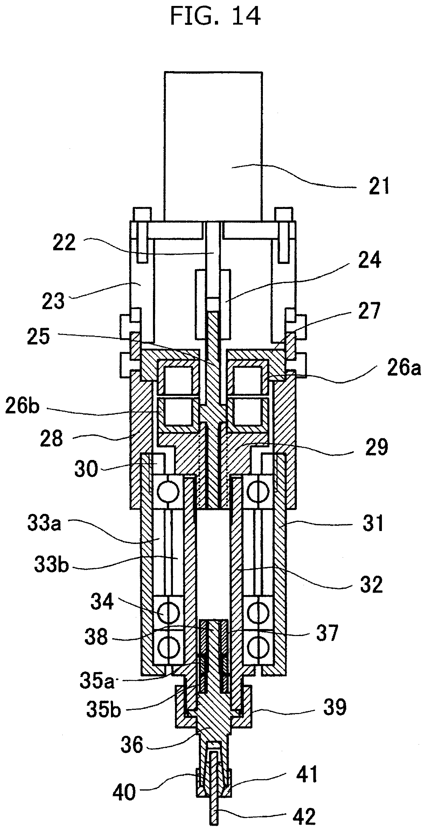

Fig. 14 illustrates a constitution of a drilling machine for performing an ultrasonic machining method. The drilling is one of the ultrasonic machining performed according to the ultrasonic machining method of the invention. In the drilling machine, the machining tool is a drill which rotates on a central axis of the ultrasonic transducer. In Fig. 14, a circuit for supplying an ultrasonic oscillation-generating energy is not shown. Fig. 14 also shows an apparatus utilizing a Langevin ultrasonic transducer which is employable for generating the Pseudo Zero Order Oscillation of the invention.

The ultrasonic machining apparatus seen in Fig. 14 comprises a ultrasonic transducer-supporting/rotating apparatus comprising motor 21, axis of motor 22, substrate of motor 23, coupling (connecting means) 24, rotation axis 25, fixed part of rotary transformer 26a, rotary part of rotary transformer 26b, fixed substrate of transformer 27, sleeve 28, rotary substrate of transformer 29, ring for outer spacer 30, case 31, housing 32, outer spacer 33a, outer spacer 33b, and bearing 34 and a Langevin ultrasonic transducer equipped with a tool. The illustrated ultrasonic transducer-supporting/rotating apparatus is as such well known.

To the bottom of the ultrasonic transducer-supporting/rotating apparatus is fixed (restrained) a Langevin ultrasonic transducer having piezoelectric elements 35a, 35b fixed between a front mass 36 and rear mass 37 by bolt 38, using a nut 39. The apparatus is fixed as such to a base. In the hollow portion of the front mass 36 of the Langevin ultrasonic transducer is placed and fixed a collet 40 by collet nut 41, and a drill 42 (that is a tool) is inserted and fixed in collet 40.

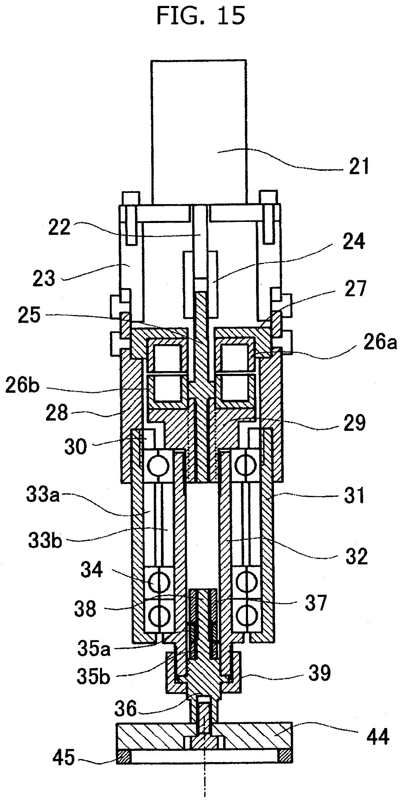

Fig. 15 illustrates a constitution of a polishing (or lapping) machine for performing an ultrasonic machining method. The polishing (or lapping) is one of the ultrasonic machining performed according to the ultrasonic machining method of the invention. In the polishing machine, the machining tool is a polishing (or lapping or abrasive) tool which rotates on a central axis of the ultrasonic transducer. In Fig. 15, a circuit for supplying an ultrasonic oscillation-generating energy is not shown.

The ultrasonic machining apparatus seen in Fig. 15 is in the same constitution as that illustrated in Fig. 14.

Still in the polishing (or lapping) machine of Fig. 15, a Langevin ultrasonic transducer having piezoelectric elements 35a, 35b fixed between a front mass 36 and rear mass 37 by bolt 38, using a nut 39 is fixed to the bottom. To the lower end of the front mass 36 of the Langevin ultrasonic transducer is placed and fixed an abrasive means in the form of ring (tool) 43 is attached via abrasive supporting means 44 (generally made of aluminum alloy) .

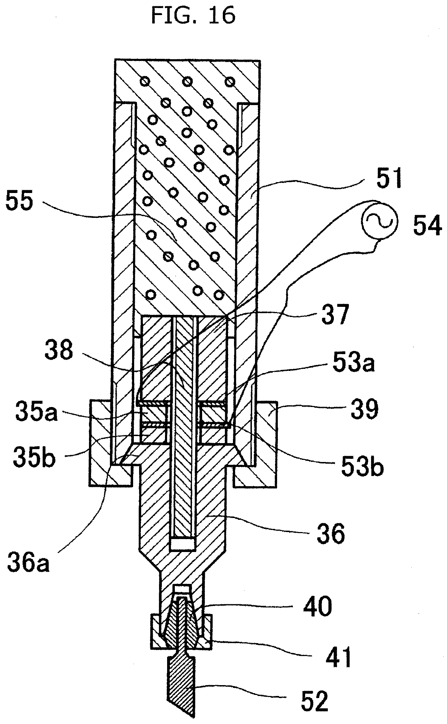

Fig. 16 illustrates a constitution of a cutting machine which can be employed for an ultrasonic machining method according to the invention. The tool employed in the machine is a cutter moving in a back-and-forth mode in the axial direction. In the cutting machine, the machine and/or works (to be machined) are moved in the lateral direction so as to vary their relative locations, and the cutter 52 attached to the ultrasonic transducer vibrates in the axial direction (that is a back-and-forth movement). Therefore, the structure of supporting the ultrasonic transducer does not rotate.

Accordingly, in the polishing machine of Fig. 16, a Langevin ultrasonic transducer having piezoelectric elements 35a, 35b fixed between a front mass 36 and rear mass 37 having a supporting means in a shape of ring 36a by bolt 38, using a nut 39 is placed in the cylindrical housing 51 on its lower side. The machine is fixed as such to a base. In the hollow portion of the front mass 36 of the Langevin ultrasonic transducer is placed and fixed a collet 40 by collet nut 41, and a cutter 52 (that is a tool) is inserted and fixed in collet 40.

Each of the electrode plates 53a, 53b formed on each of the piezoelectric elements 35a, 35b is electrically connected to a circuit for ultrasonic generation 54 and supplies electric energy to the ultrasonic transducer.

In the polishing machine of Fig. 16, foamed plastic material 55 is placed within the housing 51 so as to firmly fix the ultrasonic transducer to the housing 51.

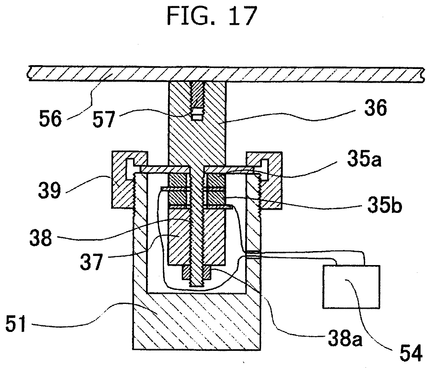

Fig. 17 illustrates an ultrasonic cleaning apparatus equipped with an ultrasonic transducer, for which the ultrasonic transmission method of the invention can be utilized. In the apparatus of Fig. 17, a Langevin ultrasonic transducer having piezoelectric elements 35a, 35b fixed between a front mass 36 and rear mass 37 by bolt 38 using a nut is fixed to the housing 51 using nut 39. On the top of the front mass 36 of the Langevin ultrasonic transducer is placed and fixed a diaphragm (vibrating plate) 56 by means of a bolt 57.

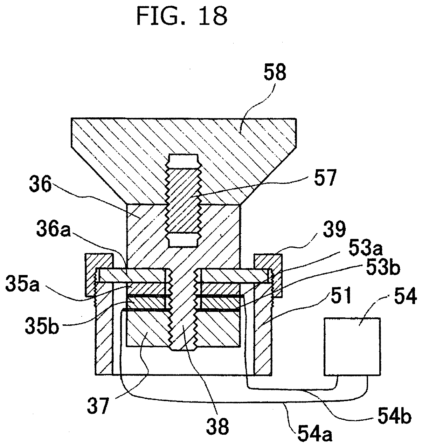

Fig. 18 illustrates an ultrasonic sonar, for which the ultrasonic transmission method of the invention can be utilized. Still in the ultrasonic sonar of Fig. 18, a Langevin ultrasonic transducer having piezoelectric elements 35a, 35b fixed between a front mass 36 and rear mass 37 by bolt 38 using a nut is fixed to the housing 51 using nut 39. On the top of the front mass 36 of the Langevin ultrasonic transducer is placed and fixed a transmission means 58 for transmitting ultrasonic wave in the air by means of a bolt 57.

The apparatus and machine employable for practicing the ultrasonic machining method or ultrasonic transmission method are not limited to those shown in the attached Figures.

The Pseudo Zero Order Oscillation provided by the invention can be employed in a variety of apparatuses and machines using a Langevin ultrasonic transducer as an ultrasonic oscillation-generating means, for example, machines for plastic working utilizing ultrasonic oscillation, such as a bending machine, a deep drawing machine, an ironing machine and a drawing machine utilizing ultrasonic oscillation, a grinding machine utilizing ultrasonic oscillation, a machine using free abrasive, utilizing ultrasonic oscillation, a bonding machine utilizing ultrasonic oscillation, a plastic molding machine utilizing ultrasonic oscillation, a micro-machining machine utilizing ultrasonic oscillation, a dispersing/atomizing apparatus utilizing ultrasonic oscillation, a ultrasonic motor, a machine for operating cataract utilizing ultrasonic oscillation, an ultrasonic crushing machine, an ultrasonic stone crushing machine, an ultrasonic tooth-operating machine, an ultrasonic continuous casting machine, an ultrasonic erosion-evaluating tester, a polyethylene-cross linking apparatus, an ultrasonic dryer, an ultrasonic air sensor, and an ultrasonic flowmeter.

## Claims

1. A method for generating ultrasonic oscillation in a Langevin ultrasonic transducer comprising a metal block, a metal block provided with a supporting means protruding in a ring shape on side surface thereof, and polarized piezoelectric elements fixed between these metal blocks, which comprises;
connecting the ultrasonic transducer to a base via the supporting means, whereby supporting the ultrasonic transducer on the base in a restrained state, and
applying to the piezoelectric elements a voltage having such frequency that the ultrasonic transducer generates an ultrasonic oscillation with back-and-forth motion in a direction perpendicular to plane surfaces of the piezoelectric elements which has no oscillation node within the ultrasonic transducer, whereby the ultrasonic oscillation having a mode of back-and-forth motion in a direction perpendicular to planes surfaces of the piezoelectric elements which has no oscillation node within the ultrasonic transducer is generated in the Langevin ultrasonic transducer.

2. The method of claim 1, in which the frequency of the voltage applied to the piezoelectric elements is a resonance frequency in a frequency range lower than a frequency at which a primay axial oscillation is generated.

3. The method of claim 1, in which an oscillation node is present at a site at which the supporting means is connected to the base and the supporting means oscillates in phase with the ultrasonic oscillation.

4. An ultrasonic machining method which comprises:
connecting a tool to one end of a Langevin ultrasonic transducer comprising a metal block, a metal block provided with a supporting means protruding in a ring shape on side surface thereof, and polarized piezoelectric elements fixed between these metal blocks;
connecting the ultrasonic transducer to a base via the supporting means, whereby supporting the ultrasonic transducer on the base in a restrained state; and
applying to the piezoelectric elements a voltage having a such frequency that the ultrasonic transducer generates an ultrasonic oscillation with back-and-forth motion in a direction perpendicular to plane surfaces of the piezoelectric elements which has no oscillation node within the ultrasonic transducer, whereby the tool oscillates with back-and-forth motion in a direction perpendicular to plane surfaces of the piezoelectric elements of the ultrasonic transducer.

5. The ultrasonic machining method of claim 4, in which the tool rotates on a central axis of the Langevin ultrasonic transducer.

6. The ultrasonic machining method of claim 4, in which the tool is selected from the group consisting of an end mill, a drill, a polishing tool and a grinding tool.

7. The ultrasonic machining method of claim 4, in which the tool moves with back-and-forth motion along a central axis of the Langevin ultrasonic transducer.

8. The ultrasonic machining method of claim 7 , in which the tool is selected from the group consisting of a cutting tool, a diaphragm and a welding tool.

9. An ultrasonic transmission method which comprises:
connecting a ultrasonic transmission means to one end of a Langevin ultrasonic transducer comprising a metal block, a metal block provided with a supporting means protruding in a ring shape on side surface thereof, and a polarized piezoelectric elements fixed between these metal blocks;
connecting the ultrasonic transducer to a base via the supporting means, whereby supporting the ultrasonic transducer on the base in a restrained state; and
applying to the piezoelectric elements a voltage having a such frequency that the ultrasonic transducer generates an ultrasonic oscillation with back-and-forth motion in a direction perpendicular to plane surfaces of the piezoelectric elements which has no oscillation node within the ultrasonic transducer, whereby the ultrasonic transmission means oscillates with back-and-forth motion in a direction perpendicular to plane surfaces of the piezoelectric elements of the ultrasonic transducer.

10. The ultrasonic transmission method of claim 9, in which the ultrasonic transmission means is a diaphragm.
